# EUROPEAN PATENT APPLICATION

(11) **EP 2 090 892 A1**
(43) Date of publication of application: **19.08.2009**
(21) Application number: 09152093.2
(22) Date of filing: 04.02.2009
(51) Int. Cl.: G01P 15/13

(54) **Flexure type accelerometer and method of making same**

(30) Priority: 15.02.2008 US 32532
(71) Applicant: Honeywell International Inc., Morristown, NJ 07962 (US)
(72) Inventor: Roehnelt, Ryan, Morristown, NJ 07962-2245 (US); Magendanz, Galen, Morristown, NJ 07962-2245 (US)
(74) Representative: Buckley, Guy Julian

(57) **Abstract**

A proof mass (122) for flexure type, magnetic and capacitance circuit accelerometer includes one or more standoff pads (156) integrally formed on a fused silica paddle (136), such as being etched or patterned on the fused silica paddle. Further, the standoff pads have a thickness sufficient to locate at least a portion of one active coil in proximity to or even within a linear flux region of a magnetic circuit of the accelerometer. As such, the proof mass is configured to function with the magnetic circuit in a consistent and stable manner over a selected operational life of the accelerometer.

## Description

### BACKGROUND OF THE INVENTION

Conventional flexure type accelerometers generally include a proof mass selectively offset from a magnetic circuit with a pliable spacer configured to be substantially shock or vibration absorbent. Because of their robust design, conventional flexure type accelerometers are used in a variety of environments, such as the harsh environment of underground drilling. One type of conventional flexure type accelerometer is a Q-FLEX® accelerometer made by Honeywell International, Inc.

One conventional flexure type accelerometer, which may be equivalent or similar to the Q-FLEX® accelerometer, includes a proof mass having a reed positioned between an active coil and an inactive coil. The reed may be constructed from a crystalline (quartz) or amorphous (fused) silica. Preferably, fused silica is utilized in applications where the accelerometer may be subjected to high vibration or shock loading. The reed includes a number of operative features that are typically etched into the fused silica substrate or blank. In addition, the reed includes a movable inner paddle hinged to a static outer rim. The outer rim includes a number of standoff pads arranged to provide a gap or space between the paddle and a pole piece of a magnetic circuit. This conventional flexure type accelerometer further includes an adhesive-based coil/reed standoff pad or spacer located on the paddle.

The adhesive-based coil/reed standoff pads are formed using a laser-cut, clover-shaped tool manufactured from a substantially thin, tape-like material. Due to the thinness of the material, the resulting shape of the tool may be difficult to laser cut accurately. For example, sometimes the edges of the tool may become upturned or frayed from the laser cutting process. The tool operates as an alignment and placement mechanism when forming the adhesive-based coil/reed standoff pads. If cutting the tool resulted in upturned or frayed portions, then the adhesive-based coil/reed standoff pads may have uneven surfaces or unwanted irregularities.

The adhesive-based coil/reed standoff pads and the formation thereof have several drawbacks. The tool is difficult to cut accurately and its thickness may vary, which means the thickness of the adhesive-based coil/reed standoff pads must be customized to account for any variations or irregularities associated with the tool. Further, the tool is difficult and costly to make and has a relatively short useful life before it should be discarded. Moreover, the tool must be removed after the curing process and if not done carefully, the removal process may disrupt or adversely impact the desired coil offset distance that was to be achieved by the formation of the adhesive-based coil/reed standoff pads.

Another drawback, after the adhesive-based coil/reed standoff pads have been successfully formed, is that the cured adhesive material of the pads may be subject to out-gassing during operation. The out-gassing generally occurs as a result of a dwell at a sufficiently high temperature experienced by the accelerometer during operation and over time has been known to cause a change in the thickness (*e*.*g*., shrinkage) of the adhesive-based coil/reed standoff pads.

Each accelerometer is tested and provided with an individualized specification sheet before being approved for operation. The individualized specification sheet includes coefficients for baseline bias and scale factors. The out-gassing of the adhesive-based coil/reed standoff pads during operation, however, changes the thickness of the pads and thus changes the spatial relationship between the attached coil and the pole piece coupled to the magnet. As a result, the bias and scale factors of the accelerometer depart from their baseline specification sheet values, which is to say they become "out-of-specification."

In the conventional Q-FLEX® accelerometer, for example, the adhesive used to form the adhesive-based coil/reed standoff pads does not stabilize until 300 hours dwell at high temperature. In oil well drilling applications, a maximum expected life of an accelerometer is 1000 hours due to high temperature and shock, but in other applications the expected life may be 20 years or more. In order to have accurate models the accelerometer may need to be calibrated relatively frequently until the 300 high temperature hours are accumulated.

### BRIEF SUMMARY OF THE INVENTION

The present invention generally relates to a flexure type accelerometer having a proof mass offset from a magnetic circuit with offset pads or spacers integrally formed on a paddle surface of a reed comprising part of the proof mass. In one embodiment, the offset pads are etched in a fused silica substrate or blank simultaneously or contemporaneously when other features are etched into the substrate. Further, no special tool is required to form the offset pads and they are not susceptible to out-gassing because they are extensions of the fused silica substrate. Advantageously, the thickness of the offset pads remains substantially constant over an operational life of the accelerometer, the baseline bias and scale factors of the accelerometer do not have to be recomputed, and the processing time, complexity, and cost are sufficiently reduced.

In one aspect of the invention, a proof mass for an accelerometer includes a reed having a movable silica paddle rotationally coupled to an outer rim member, the silica paddle having a first silica standoff pad integrally coupled to and extending from the silica paddle; and upper and lower coil members coupled to the silica paddle; the first silica standoff pad configured to position at least one of the coil members further from the silica paddle and further into a magnetic circuit located within a stator of the accelerometer when the silica paddle is subjected to zero acceleration.

In another aspect of the invention, an accelerometer includes an upper stator having at least one cavity; a lower stator coupled to the upper stator, the lower stator having at least one cavity; a magnetic circuit having a magnet aligned with a pole piece, at least a portion of the pole piece received within the at least one cavity of the lower stator. The accelerometer further includes a proof mass that includes a reed having a movable silica paddle rotationally coupled to an outer rim member, the silica paddle having a first silica standoff pad integrally coupled to and extending from the silica paddle; and upper and lower coil members coupled to the silica paddle, at least a portion of the upper coil member extending at least partially into the at least one cavity of the upper stator, at least a portion of the lower coil member extending at least partially into the at least one cavity of the lower stator, the first silica standoff pad configured to position at least the lower coil member further from the silica paddle and closer to the magnet of the magnetic circuit when the silica paddle is subjected to zero acceleration.

In yet another aspect of the invention, a method for making a proof mass for an accelerometer includes the steps of (1) masking a silica substrate to define a plurality of features on the substrate; (2) removing a predetermined amount of material from the silica substrate to form a reed having a paddle rotationally coupled to an outer rim; (3) selectively removing other portions of the paddle to define a silica standoff pad and a substantially planar surface of the paddle, the silica standoff pad having a thickness extending from and in a direction normal to the substantially planar surface; and (4) attaching a coil member to the silica standoff pad.

### BRIEF DESCRIPTION OF THE DRAWINGS

Preferred and alternative embodiments of the present invention are described in detail below with reference to the following drawings:

FIGURE 1 is a cross-sectional view of an accelerometer having integrally formed standoff pads located on a movable paddle of a proof mass according to an illustrated embodiment of the invention; and

FIGURE 2 is the proof mass of FIGURE 1 having a reed with the integrally formed standoff pads coupled to upper an lower coils according to an illustrated embodiment of the invention;

FIGURE 3 is the reed of FIGURE 2 with the integrally formed standoff pads formed thereon according to an illustrated embodiment of the invention;

FIGURE 4 is a close-up view of the standoff pads from FIGURE 3; and

FIGURE 5 is a cross-sectional view of the standoff pads taken along line 5-5 of FIGURE 4.

### DETAILED DESCRIPTION OF THE PREFERRED EMBODIMENT

In the following description, certain specific details are set forth in order to provide a thorough understanding of various embodiments of the invention. However, one skilled in the art will understand that the invention may be practiced without these details or with various combinations of these details. In other instances, well-known structures and methods associated with flexure type, magnetic circuit accelerometers having a proof mass selectively spaced from a magnetic circuit and methods for making the same may not be shown or described in detail to avoid unnecessarily obscuring descriptions of the embodiments of the invention.

The following description is generally directed to a flexure type, magnetic and capacitance circuit accelerometer having a proof mass selectively spaced from a magnetic circuit with one or more standoff pads integrally formed from a fused silica substrate or blank. In one embodiment, one or more standoff pads are selectively etched in the fused silica substrate and thus themselves are made of silica. Further, the standoff pads have a thickness that is sufficient to locate at least a portion of one active coil in proximity to or even within a linear flux region of the magnetic circuit. As such, the proof mass is configured to function with the magnetic circuit in a consistent and stable manner over a selected operational life of the accelerometer without having to re-model any of the bias or scale factors associated with each individual accelerometer before it is shipped to a customer.

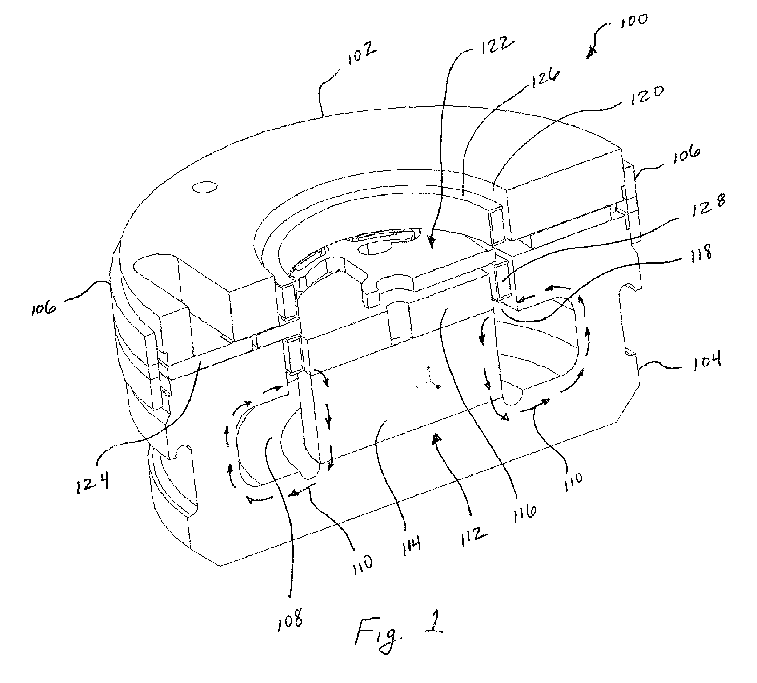

FIGURE 1 shows an accelerometer 100 having an upper (inactive) stator 102 coupled to a lower (active) stator 104 using a strap or band 106, commonly referred to as a "belly band." The stators 102, 104 are also commonly referred to as excitation rings or e-rings. The lower stator 104 includes a magnetic flux cavity 108 configured to urge magnetic field 110 of a magnetic circuit 112 around the magnetic flux cavity 108. In the illustrated embodiment, the magnetic field 110 is shown schematically as magnetic flux lines for illustrative and descriptive purposes only and may take other forms, move in different directions, *etc*. The magnetic circuit 112 includes a magnet 114 and a pole piece 116 coupled to the magnet 114. The pole piece 116 is sized to fit within a bore 118 located adjacent to the magnetic flux cavity 108. Further, the upper stator 102 includes a correspondingly sized bore 120. The purpose and sizing of the bores 118, 120 are described in greater detail below.

The accelerometer 100 further includes a proof mass 122 located between the upper stator 102 and the lower stator 104. The proof mass 122 includes a reed 124 located between to an upper (inactive) coil member 126 and lower (active) coil member 128. For purposes of clarity, the detailed features and aspects of the proof mass 122 are described hereinafter with respect to the following drawings.

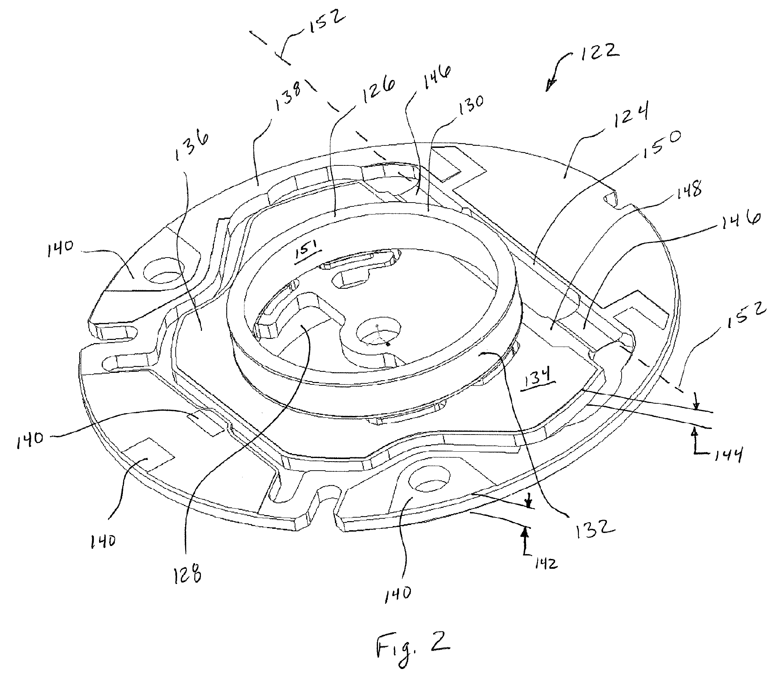

FIGURE 2 shows the proof mass 122 having the reed 124 located between the coil members 126, 128 according to an illustrated embodiment of the invention. In one embodiment, each coil 126, 128 include an aluminum bobbin 130 with copper wire 132 wound around the bobbin 130. The upper coil 126 is referred to as the inactive coil because it is located on an upper surface 134 of the reed 124 and does not directly interact with the magnet 114 (FIGURE 1) or the pole piece 116 (FIGURE 1). Likewise, the lower coil 128 is referred to as the active coil because it is received in the lower stator 104 (FIGURE 1) and thus forms part of the active magnetic circuit 112.

The reed 124 includes a paddle 136 mechanically and rotationally coupled to an outer rim 138, for example through a flexure. The outer rim 138 may include one or more spacer regions 140, each having a spacer thickness 142 greater than a paddle thickness 144. A flexure 146 may take the form of a thin membrane that connects a rear portion 148 of the paddle 136 to a corresponding portion 150 of the outer rim 138. The flexure 146 permits the paddle 136 to rotate in either a +G or a -G direction about a flexure line 152. The ±G direction is substantially parallel to a cylindrical axis (not shown) defined by an inner diameter surface 151 (FIGURE 2) of the coils 126, 128.

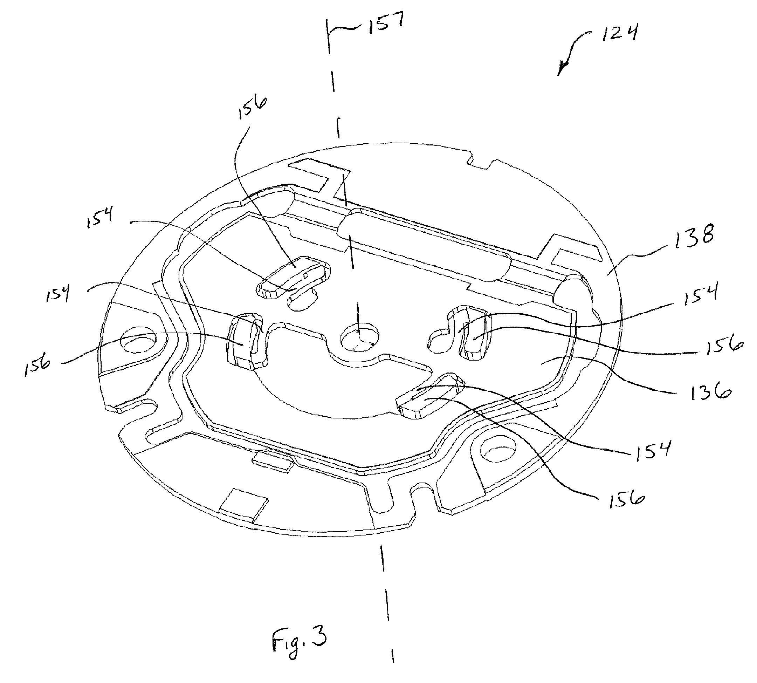

For illustrative and clarity purposes, FIGURE 3 shows the reed 124 without the coils 126, 128 attached thereto. The paddle 136 includes a plurality of thermal isolation arms or stress relief features 154 that substantially, but not completely surround a plurality of standoff pads 156. By way of example, U.S. Patent No. 5,111,694 describes a number of mounting sites for mounting the coils 126, 128 to the paddle 136 and further describes that the mounting sites may operate as stress relief features to accommodate thermally induced strains.

The standoff pads 156 are integrally formed with the paddle 136. In the illustrated embodiment, the standoff pads 156 and the paddle 136 are both formed from a fused silica substrate or blank in which material may be removed, but not added, during the formation process. In one embodiment, the forming process may include an etching process and a lithographic patterning process known in the art of making silica structures. Hence, the standoff pads 156 may be formed simultaneously or contemporaneously when one or more of the other features of the reed 124 are etched formed. The silica standoff pads 156 may take a variety of shapes, such as, but not limited to, arcuate or rectangular shaped pads. In addition, the silica standoff pads 156 are integrally connected to the stress relief features 154.

Multiple silica standoff pads 156 may be arranged with respect to an axis of symmetry 157. In the illustrated embodiment of FIGURE 3, there are four silica standoff pads 156 symmetrically arranged on the paddle 136. In certain embodiments, at least having a left-right and an up-down symmetry may operate to place the center of the coils 126 (FIGURE 2) into coaxial alignment with the magnet 114, the pole piece 116, and the bores 118, 120 (FIGURE 1) while a front-back symmetry may help in reducing misalignment along the accelerometer sensing axis.

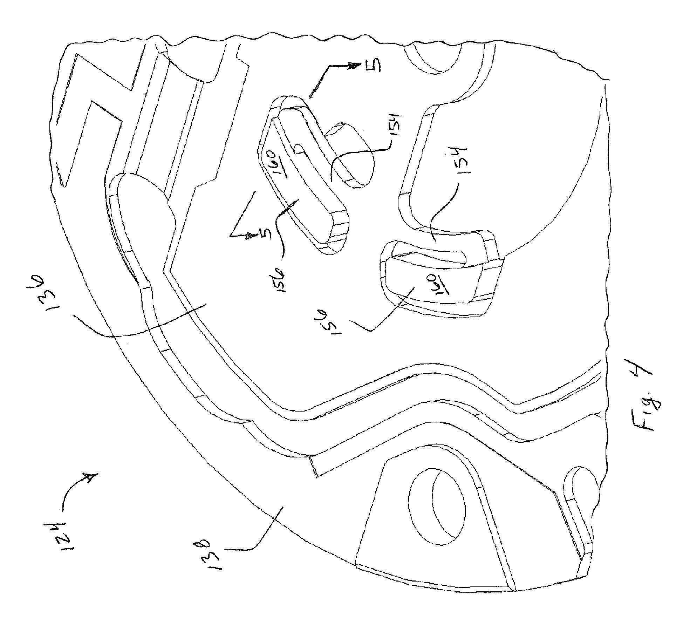

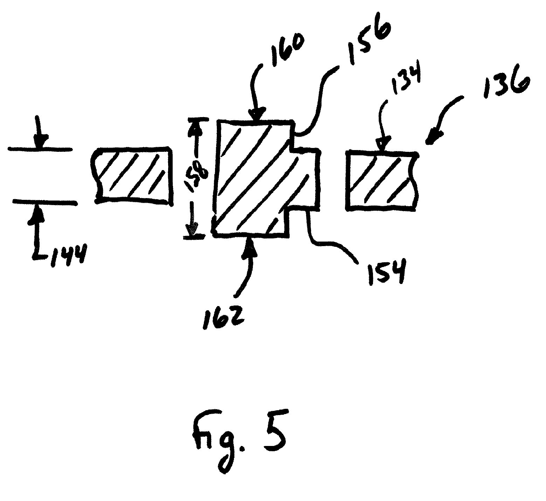

FIGURES 4 and 5 show that the silica standoff pads 156 each have a pad thickness 158 defined by an upper pad surface 160 and a lower pad surface 162. The pad thickness 158 is greater than the paddle thickness 144 (FIGURE 2). The pad thickness 158 is selected so that when the lower coil 128 (FIGURE 1) is coupled to the pads 156, at least a portion of the lower coil 128 (FIGURE 1) extends into the magnetic field 110 (FIGURE 1) by a sufficient amount to be less affected by large magnetic flux gradients near a top portion of the pole piece 116 (FIGURE 1). The linearity of the magnetic circuit 112 (FIGURE 1) is known to have large gradients near the top of the pole piece 116 (FIGURE 1) and smaller gradients (*i*.*e*., more linear) near the interface between the pole piece 116 (FIGURE 1) and the magnet 114 (FIGURE 1). Each coil 126, 128 is coupled to the respective standoff pads 156 with a thin adhesive or bonding material.

Integrally forming the standoff pads 156 by etching the pads, for example by lithographic patterning, simultaneously or contemporaneously with the paddle 136 advantageously eliminates the need for the clover-shaped tool that is currently used to make the standoff pads 156. Specifically, the above-described integrally formed standoff pads 156 eliminate the clover-shaped tool and simplify the manufacturing process of the proof mass 122 by eliminating at least two manufacturing steps per accelerometer produced. Further, the silica standoff pads 156 are more robust and not susceptible to the out-gassing and degradation issues associated with the adhesive-based coil/reed standoff pads described in the background. In turn, the silica standoff pads 156 increase the stability and operating consistency of the accelerometer over its lifetime while accomplishing the objective of locating the active coil closer to or within a linear range of the magnetic circuit.

The various embodiments described above can be combined to provide further embodiments. All of the above U.S. patents, patent applications and publications referred to in this specification as well as U.S. Patent Nos. 5,959,207; 5,763,779; and 5,111,694, are incorporated herein by reference in their entireties. Aspects can be modified, if necessary, to employ devices, features, and concepts of the various patents, applications and publications to provide yet further embodiments.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. A proof mass for an accelerometer, the proof mass comprising:
a reed having a movable silica paddle rotationally coupled to an outer rim member, the silica paddle having a first silica standoff pad integrally coupled to and extending from the silica paddle; and
upper and lower coil members coupled to the first silica standoff pad; the first silica standoff pad configured to position at least one of the coil members further from the silica paddle and closer to a magnetic circuit located within a stator of the accelerometer when the silica paddle is subjected to zero acceleration.

2. The proof mass of Claim 1, further comprising a second silica standoff pad integrally coupled to and extending from the silica paddle.

3. The proof mass of Claim 2, wherein the first silica standoff pad is positioned symmetrically with respect to the second silica standoff pad.

4. The proof mass of Claim 1, wherein a thickness of the first silica standoff pad is sufficient to maintain at least a portion of one of the coil members within a linear flux region of the magnetic circuit.

5. The proof mass of Claim 1, further comprising a second silica standoff pad integrally coupled to and extending from the silica paddle and symmetrically positioned with respect to the first silica standoff pad.

6. An accelerometer comprising:
an upper stator having at least one cavity;
a lower stator coupled to the upper stator, the lower stator having at least one cavity;
a magnetic circuit having a magnet aligned with a pole piece, at least a portion of the pole piece received within the at least one cavity of the lower stator;
a proof mass comprising:
a reed having a movable silica paddle rotationally coupled to an outer rim member, the silica paddle having a first silica standoff pad integrally coupled to and extending from the silica paddle; and
upper and lower coil members coupled to the silica paddle, at least a portion of the upper coil member extending at least partially into the at least one cavity of the upper stator, at least a portion of the lower coil member extending at least partially into the at least one cavity of the lower stator, the first silica standoff pad configured to position at least the lower coil member further from the silica paddle and closer to the magnet of the magnetic circuit when the silica paddle is subjected to zero acceleration.

7. The accelerometer of Claim 6, wherein a thickness of the first silica standoff pad is sufficient to maintain at least a portion of one of the coil members within a linear flux region of the magnetic circuit.

8. The accelerometer of Claim 6, further comprising a second silica standoff pad integrally coupled to and extending from the silica paddle and symmetrically positioned with respect to the first silica standoff pad.

9. A method for making a proof mass for an accelerometer, the method comprising:
masking a silica substrate to define a plurality of features on the substrate;
removing a predetermined amount of material from the silica substrate to form a reed having a paddle rotationally coupled to an outer rim;
selectively removing other portions of the paddle to define a silica standoff pad and a substantially planar surface of the paddle, the silica standoff pad having a thickness extending from and in a direction normal to the substantially planar surface; and
attaching a coil member to the silica standoff pad.

10. The method of Claim 9, wherein attaching the coil member to the silica standoff pad includes locating the coil member a desired distance from the substantially planar surface of the paddle.
